Europäisches Patentamt

European Patent Office

Office européen des brevets

(19)

(11) Numéro de publication: **0 172 060**
**A2**

# (12) DEMANDE DE BREVET EUROPEEN

(21) Numéro de dépôt: **85401372.9**

(22) Date de dépôt: **05.07.85**

(51) Int. Cl.⁴: **A 01 G 9/10**

(30) Priorité: **05.07.84 ES 534041**

(43) Date de publication de la demande:
**19.02.86 Bulletin 86/8**

(84) Etats contractants désignés:
**AT BE CH DE FR GB IT LI LU NL SE**

(71) Demandeur: **CREATIONS CHALLET HERAUT S.a.r.l.
Route de Cholet B.P. No. 2 Nuaillé
F-49340 Trementines(FR)**

(72) Inventeur: **Challet, Paul
"Le Courtil" Nuaillé
F-49340 Trémentines(FR)**

(72) Inventeur: **Brochard, Patrice
24, Boulevard Victor-Hugo
F-49300 Cholet(FR)**

(72) Inventeur: **Cailleton, Jacques
Rue Joseph Foyer
F-49360 Maulevrier(FR)**

(74) Mandataire: **Bruder, Michel
Cabinet Michel Bruder 10, rue de la Pépinière
F-75008 Paris(FR)**

(54) **Substrat de culture pour les cellules, tissus, organes, végétaux et plantes entières.**

(57) Un substrat de culture pour les cellules, tissus, organes végétaux et plantes entières, est constitué d'un tampon cylindrique (1). Pour améliorer le développement des organes végétaux tels que plants le tampon cylindrique (1) est formé de fibres longues (2) disposées radialement par rapport à l'axe du tampon et obtenues à partir d'une fourrure artificielle coupée en bande (3), repliée sur elle-même pour former un cylindre, les deux lèvres extrêmes (4, 5) de la bande (3) étant ensuite fixées l'une à l'autre par exemple par couture collage ou soudage.

Fig. 1

EP 0 172 060 A2

La présente invention concerne un substrat de culture pour les cellules, tissus, organes végétaux et plantes entières utilisable aussi bien pour la culture in vitro en conditions stériles qu'à l'extérieur ou sous serre pour le bouturage ou le semis.

La culture in vitro se réalise généralement sur des milieux gélifiés et sucrés. L'un des buts de cette culture in vitro est la multiplication végétative accélérée de plantes d'un certain intérêt économique. Cette multiplication végétative passe par un certain nombre d'étapes: prolifération et fractionnement des bourgeons, enracinement et sortie du jeune plant hors du récipient de culture, repiquage sur le substrat définitif et acclimatation aux conditions extérieures.

L'enracinement et la sortie du plant du récipient stérile sont souvent des étapes délicates. En effet les milieux gélifiés, asphyxiants par nature, ne sont jamais très favorables au bon développement du système racinaire. Par ailleurs, lors de la sortie du plant, il est nécessaire de laver abondamment le système racinaire pour le débarrasser du milieu gélifié sucré, entraînant ainsi des frais de main d'oeuvre importants et des risques de blessure du jeune plant. Le plant doit être repiqué à racines nues avant son acclimatation à l'ambiance extérieure.Dans le cas du bouturage ou du semis à l'extérieur ou sous serre, dans des conditions de culture normale, on utilise habituellement des substrats composés de mélanges de tourbe et de terre dont les compositions sont rarement identiques d'un échantillon à l'autre et qui sont souvent contaminées par des microorganismes ou des graines étrangères.

On connaît par ailleurs des substrats de culture constitués de fibres synthétiques, ainsi qu'il est décrit dans le brevet EU-A-0 117 766 de la demanderesse.

La présente invention concerne des perfectionnements apportés à ces substrats de culture pouvant être utilisés aussi bien pour la culture in vitro qu'à l'extérieur ou sous serre pour le bouturage ou le semis.

A cet effet, ce substrat de culture pour les cellules, tissus, organes végétaux et plantes entières, est caractérisé en ce qu'il est constitué d'un tampon cylindrique de fibres longues disposées radialement par rapport à l'axe du tampon et obtenues à partir d'une fourrure artificielle coupée en bande repliée sur elle-même pour former un cylindre, les deux lèvres extrêmes de la bande étant ensuite fixées l'une à l'autre par exemple par couture collage ou soudage. L'ensemble ainsi obtenu peut être enduit ou non extérieurement d'une colle synthétique augmentant la rigidité et la rétention en eau.

Le diamètre de ces tampons cylindriques peut être réglé soit par la largeur et l'épaisseur de la bande de fourrure utilisée pour fabriquer les tampons, ceci jusqu'à un diamètre d'environ 3cm, soit pour, des diamètres supérieurs, par la constitution de plusieurs couches de fourrure coaxiales ou en spirale.

La longueur des tampons cylindriques dépend de la plante et du mode de culture. A titre d'exemple on peut utiliser, pour constituer le substrat de culture suivant l'invention, des fibres synthétiques telles que acryliques, modacryliques, polyamide, polyester, polypropylène, tétrafluoroéthylène.On peut également utiliser des fibres artificielles ou naturelles telles que viscose, alginate, coton, laine etc...ou tout autre fibre ayant des qualités similaires. Ces fibres peuvent être à l'état pur ou mélangées entre elles.

Notamment, le substrat de culture peut être constitué en partie de fibres chimiquement, physiquement et microbiologiquement stables dans les conditions d'emploi habituelles et en partie de fibres microbiologiquement dégradables, ce qui permet ainsi un desserrement progressif des fibres autour des racines de la plante.

Dans le cas où le substrat est soumis à un traitement thermique de stérilisation par exemple, les fibres doivent avoir un point de ramollissement ou de dégradation inférieur à la température de traitement, par exemple elles doivent pouvoir résister à une température de 120ºC. Par

0172060

contre dans le cas du bouturage direct les fibres peuvent avoir un point de ramollissement beaucoup plus bas: on peut utiliser, par exemple, des fibres en chlorure de polyvinyle.

Pour en augmenter la capacité de rétention d'eau, le substrat peut être imprégné d'un gel hydrophile se gonflant en présence d'eau liquide.

Dans le substrat peuvent également être incorporés des éléments nutritifs ou des substances favorisant la croissance des plantes. Suivant leur type d'action et l'usage du substrat, ces éléments peuvent être apportés sous une forme à solubilité rapide ou lente, ou encore sous une forme insoluble dans les conditions habituelle, mais soluble et assimilable par les plantes après dégradation microbiologique.

Les tampons peuvent être utilisés en laboratoire ou en tant que substrat de bouturage direct.

Dans le cas de l'utilisation en laboratoire, les tampons sont introduits dans des tubes de culture ou installés sur un support ad hoc contenu dans le récipient de culture. Une petite quantité de milieu liquide de culture, calculée de façon qu'un tiers environ de la hauteur du tampon soit immergé, est introduite dans le récipient. L'ensemble est ensuite stérilisé à l'autoclave à 120oC.

L'excellente capillarité du tampon permet l'établissement direct des cultures à partir de petits fragments végétaux tels que les méristèmes. Toutes les étapes de la culture in vitro peuvent être ainsi réalisées sur les tampons.

Le meilleur usage reste cependant le stade final de l'enracinement : les microboutures sont introduites stérilement dans le tampon. Une fois l'enracinement effectué, l'ensemble plante et tampon est passé sous brouillard artificiel permettant simultanément l'acclimatation de la plante aux conditions extérieures et le lessivage du tampon des éléments tels que les sucres, qui pourraient être néfastes en conditions non stériles.

La pré-imprégnation possible du tampon par une solution nutritive simplifie encore les opérations, puisqu'il suffit alors, après avoir installé le tampon dans le récipient de culture, d'y ajouter une quantité d'eau purifiée, avant l'autoclave de l'ensemble.

Un autre avantage de ce tampon réside dans le fait de permettre, en cours de culture, un renouvellement ou changement de milieu nutritif permettant d'adapter celui-ci aux exigences successives de la culture : bourgeonnement, enracinement, repos végétatif etc...

Dans le cas où le tampon est utilisé en tant que substrat de bouturage direct, la bouture est introduite partiellement dans le tampon à l'endroit d'un trou préalablement formé ou en forçant l'écartement des fibres. L'apport des substances de croissance nécessaires à l'enracinement peut être donné soit par pré-imprégnation du tampon, soit par trempage des boutures dans une poudre ou un liquide contenant les substances nécessaires. L'ensemble bouture plus tampon est placé sous brouillard artificiel ou à l'étouffée.

Les racines se développent au sein du tampon et constituent une minimotte qui n'est pas dérangée lors des manipulations ultérieures. Ceci permet, pour les plantes délicates, un transfert facile sur le substrat définitif, sans provoquer d'arrêt de végétation. La plantation définitive ou la vente des jeunes plantes se fait au moment où les racines commencent à être visibles à l'extérieur du tampon.

La réserve d'eau maintenue dans le tampon permet le transport ou le stockage momentané des jeunes plants sans qu'ils aient à souffrir de dessication.

L'inertie chimique et microbiologique des matériaux constituant ces tampons garantit, lors du bouturage, la non contamination par des germes pathogènes qui pourraient être contenus dans les substrats usuels tels que tourbe, terre.

Le substrat de culture suivant l'invention offre de nombreux avantages par rapport aux substrats connus.

En premier lieu, pour la culture in vitro, l'excellente capillarité des tampons de fibres synthétiques permet de n'utiliser qu'une quantité faible de liquide nutritif. De ce fait seule la partie basse du tampon est saturée de liquide, la partie haute, aérée, permettant un excellent développement racinaire. Par ailleurs lorsque les racines sont bien développées dans le tampon, il est possible de sortir le plant sans déranger le système racinaire. Le lessivage du milieu sucré se fait simultanément à l'acclimatation par le passage sous brouillard.

En second lieu, pour le bouturage direct ou pour le semis à l'extérieur ou sous serre, le substrat suivant l'invention constitue, de par son aération et par sa capillarité, un milieu très favorable à la rhizogénèse et à la croissance.

Ne comportant pas d'éléments terreux, il peut permettre, pour des jeunes plants réalisés sur le substrat, le passage des frontières vers les pays refusant la terre pour des raisons phytosanitaires.

Les tampons de fibre peuvent être utilisés isolément en étant disposés dans des supports ad hoc ou reliés les uns aux autres par un système d'attache souple ou cassant, élastique ou non, pour constituer des bandes de tampons disposés parallèlement et reliées les unes aux autres par un système d'attache quelconque de manière à constituer ainsi des plaques de tampons disposés verticalement et parallèlement les uns aux autres.

Suivant une variante de réalisation, le substrat de culture peut être constitué par une nappe de fibres découpée en rectangle et sur les deux grands côtés opposés de laquelle sont fixés, par couture ou collage, deux bandes élastiques à l'état étiré. Par conséquent, lorsque l'on cesse de tirer sur les bandes élastiques ainsi collées, ces dernières replient la nappe sur elle-même en formant un manchon subcylindrique ou un tonneau. Les deux lèvres en regard de ce manchon, qui sont formées par les deux petits côtés du rectangle de la nappe initiale à plat, peuvent être maintenues, si nécessaire, par des agrafes, un anneau de plastique fendu ou tout autre dispositif équivalent. Ce manchon peut comporter ou non un agent rétenteur d'eau tel qu'un gel ou des fibres hydrophiles à l'état sec qui s'imbibent et se gonflent en présence d'eau liquide. Le manchon peut être enduit extérieurement d'une colle synthétique augmentant la rigidité et diminuant les déperditions d'eau.

Ce dernier type de substrat peut être utilisé pour le marcottage direct : en effet il peut être enroulé facilement autour d'une tige, l'humidité provoquant l'apparition de racines dans le substrat. Il peut être également utilisé pour le repiquage de jeunes plants racinés, du fait qu'il peut être installé facilement sans blesser les racines.

On décrira ci-après, à titre d'exemples non limitatifs, diverses formes d'exécution de la présente invention, en référence au dessin annexé sur lequel :

La figure 1 est une vue en perspective d'un substrat de culture suivant l'invention dans lequel s'est développé un plant.

La figure 2 est une vue en perspective d'un substrat de culture formé par plusieurs couches coaxiales cylindriques d'une fourrure artificielle.

La figure 3 est une vue en perspective d'un substrat de culture formé par l'enroulement d'une bande de fourrure artificielle en spirale.

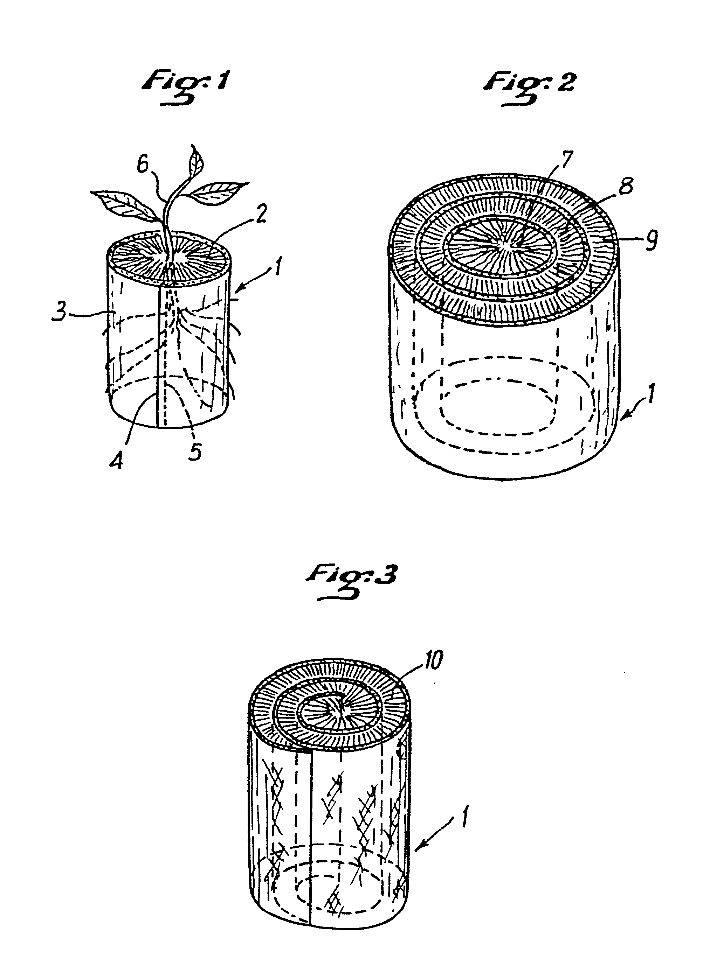

Comme on peut le voir sur la figure 1 du dessin le substrat de culture est constitué par un tampon 1 de fibres longues 2 disposées radialement par rapport à l'axe longitudinal du tampon. Ces fibres font parties d'une bande de fourrure artificielle comportant un support 3 dont sont issues les fibres 2. La bande de fourrure artificielle est repliée sur elle-même pour former un cylindre, les fibres 2 s'étendant vers l'intérieur, en direction de l'axe de ce cylindre, en étant jointives. Les deux lèvres extrêmes 4 et 5 de la bande constituant le support 3 des fibres 2 sont fixées l'une à l'autre, par tous moyens appropriés, par exemple par couture, collage ou soudage.

On voit également sur la figure 1 un plant 6 dont les racines se sont développés à l'intérieur du tampon cylindrique 1.

Le tampon cylindrique 1 à une seule couche de fibres 2 qui est représenté sur la figure 1, peut convenir jusqu'à un diamètre d'environ 3cm. Pour un diamètre supérieur on peut utiliser,par exemple une des formes d'exécution représentées sur les figures 2 et 3.

Dans la forme d'exécution de l'invention représentée sur la figure 2 le tampon cylindrique est constitué de plusieurs couches coaxiales cylindriques 7,8,9 de fourrure artificielle, emboîtées étroitement les unes dans les autres. Ces couches forment respectivement des tampons élémentaires de diamètre croissant, le tampon cylindrique interne 7 ayant un diamètre externe sensiblement égal au diamètre interne du tampon cylindrique intermédiaire 8 qui a son tour un diamètre externe sensiblement égal au diamètre interne du tampon cylindrique externe 9.

Dans la variante d'exécution de l'invention représentée sur la figure 3 le tampon cylindrique 1 est constitué par l'enroulement en spirale sur elle-même d'une seule et même bande de fourrure artificielle 10.

REVENDICATIONS

1 - Substrat de culture pour les cellules, tissus, organes végétaux et plantes entières, est caractérisé en ce qu'il est constitué d'un tampon cylindrique (1) de fibres longues (2) disposées radialement par rapport à l'axe du tampon et obtenues à partir d'une fourrure artificielle coupée en bande (3), repliée sur elle-même pour former un cylindre, les deux lèvres extrêmes (4,5) de la bande (3) étant ensuite fixées l'une à l'autre par exemple par couture collage ou soudage.

2.- Substrat de culture suivant la revendication 1 caractérisé en ce que le tampon cylindrique 1 est enduit extérieurement d'une colle synthétique.

3.- Substrat de culture suivant la revendication 1 caractérisé en ce que les tampons (1) de fibres (2) sont reliés les uns aux autres par un système d'attache souple ou cassant, élastique ou non, pour constituer des bandes de tampons disposés parallèlement les uns aux autres.

4.- Substrat de culture suivant la revendication 3 caractérisé en ce que les bandes de tampon sont accolées et reliées les unes aux autres par un systèmes d'attache pour constituer ainsi des plaques de tampons disposés verticalement et parallèlement les uns aux autres.

5.- Substrat de culture suivant l'une quelconque des revendications précédentes caractérisé en ce qu'il est pré-imprégné de substances nutritives ou stimulantes pour les plantes.

6.- Substrat de culture suivant l'une quelconque des revendications précédentes caractérisé en ce qu'il est pré-imprégné d'un gel ou d'un produit hydrophile à l'état sec et servant de rétenteur d'eau une fois mouillé et gonflé.

7.- Substrat de culture suivant l'une quelconque des revendications précédentes caractérisé en ce qu'il est constitué par une nappe de fibres découpée en rectangle et sur les deux grands côtés opposés de laquelle sont fixés, par couture ou collage, deux bandes élastiques en position

**0172060**

étirée, si bien qu'en position de repos ces deux bandes élastiques replient la nappe sur elle-même en formant un manchon sub-cylindrique, les deux lèvres de ce manchon pouvant être maintenues par des agrafes ou un anneau de plastique fendu, le manchon sub-cylindrique ainsi obtenu pouvant comporter un agent rétenteur d'eau tel que gel ou fibre hydrophile et pouvant être éventuellement enduit extérieurement d'une colle synthétique.

1/1       0172060

Fig. 1

Fig. 2

Fig. 3